# EUROPEAN PATENT APPLICATION

(11) **EP 4 752 696 A1**
(43) Date of publication of application: **03.06.2026**
(21) Application number: 24905550.0
(22) Date of filing: 05.08.2024
(51) Int. Cl.: G06F 3/04817

(54) **DISPLAY METHOD, ELECTRONIC DEVICE, AND READABLE MEDIUM**

(30) Priority: 18.12.2023 CN 202311750058
(71) Applicant: Honor Device Co., Ltd., Shenzhen, Guangdong 518040 (CN)
(72) Inventor: HUANG, Tonghuan, Shenzhen, Guangdong 518040 (CN); GUO, Daoxin, Shenzhen, Guangdong 518040 (CN)
(74) Representative: Isarpatent
(86) International application number: PCT/CN2024/109741
(87) International publication number: WO 2025/130054

(57) **Abstract**

This application provides a display method, an electronic device, and a readable medium. The display method includes: receiving a first operation of a user for starting a first application, obtaining first information and property information of a memory, and displaying an interface of the first application based on the first information and the property information of the memory; receiving, within a first time period after the user exits the first application, a second operation of the user for starting the first application; and obtaining second information, and displaying the interface of the first application based on the second information. The first operation input by the user is to cold start the first application, and the second operation input by the user, within a time period after the user exits the first application, is not to cold start the first application. Only when the first application is cold started, the electronic device reads the property information of the memory, reduces a quantity of times of reading the property information of the memory, and reduces time consumed by a render thread for continuously running a WebViewFunctor::drawVk function, thereby avoiding a phenomenon that the electronic device lags during sliding when the user inputs an operation on an application interface.

## Description

This application claims priority to Chinese Patent Application No. 202311750058.3, filed with the China National Intellectual Property Administration on December 18, 2023 and entitled "DISPLAY METHOD, ELECTRONIC DEVICE, AND READABLE MEDIUM", which is incorporated herein by reference in its entirety.

### TECHNICAL FIELD

This application relates to the field of display technologies, and in particular, to a display method, an electronic device, a computer program product, and a computer-readable storage medium.

### BACKGROUND

Currently, when a user uses a browser or a shopping application of an electronic device, a problem that the electronic device lags during sliding occurs.

It is found through researching that in a procedure in which the electronic device starts and runs the browser or the shopping application, in response to a sliding operation of the user on an application interface, a render thread (RenderThread) of the browser or the shopping application of the electronic device runs to update content on an interface for display. It takes a relatively long time for the render thread to continuously run a WebViewFunctor::drawVk function, which causes a lag problem during sliding.

It is found through further researching that a reason of the relatively long time consumed by the render thread for continuously running the WebViewFunctor::drawVk function is that the electronic device reads property information of a memory for a plurality of times.

### SUMMARY

This application provides a display method, an electronic device, a computer program product, and a computer-readable storage medium, to avoid a phenomenon that the electronic device lags during sliding when a user inputs an operation on an application interface.

To achieve the foregoing objective, this application provides the following technical solutions:
According to a first aspect, this application provides a display method, including: receiving a first operation of a user for starting a first application; obtaining first information and property information of a memory in response to the first operation, and displaying an interface of the first application based on the first information and the property information of the memory; receiving, within a first time period after the user exits the first application, a second operation of the user for starting the first application; and obtaining second information in response to the second operation, and displaying the interface of the first application based on the second information.

That the user inputs the first operation to start the first application may be understood to cold start the first application. In response to the first operation, the electronic device needs to obtain the first information and the property information of the memory before the interface of the first application is displayed. That the user exits the first application for a time period and then inputs the second operation for starting the first application may be understood to warm start or hot start the first application, but not to cold start the first application. In response to the second operation, the electronic device obtains only the second information before the interface of the first application is displayed, without a need to obtain the property information of the memory. It can be learned that the electronic device reads the property information of the memory only when the electronic device cold starts on the first application, and does not read the property information of the memory when the first application is started in a non-cold start manner. This may reduce a quantity of times of reading the property information of the memory and reduce time consumed by a render thread for continuously running a WebViewFunctor::drawVk function, thereby avoiding a phenomenon that the electronic device lags during sliding when the user inputs an operation on an application interface.

In a possible implementation, the first information and the second information are association information for displaying the interface of the first application.

In a possible implementation, before the obtaining first information and property information of a memory, the method further includes: determining that a process needs to be started in a procedure of starting the first application. When a process needs to be started in the procedure of starting the first application, it indicates that the first application is cold started.

In a possible implementation, before the obtaining second information, the method further includes: determining that a process does not need to be started in the procedure of starting the first application. When a process does not need to be started in the procedure of starting the first application, it indicates that the first application is not cold started.

In a possible implementation, the method further includes: receiving a third operation input by the user on the interface of the first application, where the third operation is used to switch the interface of the first application; obtaining third information in response to the third operation, and displaying a switched interface of the first application based on the third information, where the third information is association information for displaying the switched interface of the first application.

In the foregoing possible implementation, the user inputs the third operation on the interface of the first application to switch to display the interface. The electronic device obtains only the third information and does not obtain the property information of the memory, which reduces the quantity of times of reading the property information of the memory, and further reduces the time consumed by the render thread for continuously running the WebViewFunctor::drawVk function, thereby avoiding the phenomenon that the electronic device lags during sliding when the user inputs an operation on the application interface.

In a possible implementation, the obtaining first information and property information of a memory includes: obtaining the first information and a buffer value of the property information of the memory. The buffer value of the property information of the memory is different from the property information of the memory. The electronic device obtains the buffer value of the property information of the memory without a need to invoke a plurality of functions to read parameters such as an available memory heap and a memory type. In this case, time consumed by the electronic device for obtaining the buffer value of the property information of the memory once is far less than time consumed for obtaining the property information of the memory once, which further reduces the time consumed by the render thread for continuously running the WebViewFunctor::drawVk function, thereby avoiding the phenomenon that the electronic device lags during sliding when the user inputs an operation on the application interface.

In a possible implementation, time consumed for obtaining the buffer value of the property information of the memory is at a microsecond level.

In a possible implementation, in a procedure of obtaining the buffer value of the property information of the memory, the electronic device does not invoke a function to read a parameter stored in a register.

In a possible implementation, the buffer value of the property information of the memory is stored in a variable form when being enabled by the electronic device.

In a possible implementation, the obtaining first information and property information of a memory includes: obtaining the first information and the property information of the memory, when a graphics processing unit driver of the electronic device receives an interface display task by using a three-dimensional graphics processing library Vulkan.

According to a second aspect, this application provides an electronic device, including one or more processors, a storage, and a display screen. The storage and the display screen are coupled to the one or more processors. The storage is configured to store a computer program, where the computer program includes computer instructions. When the one or more processors execute the computer instructions, the electronic device performs the display method according to any one of the first aspect and the possible implementations of the first aspect.

According to a third aspect, this application provides a computer-readable storage medium, configured to store a computer program, and when being executed, the computer program is specifically configured to implement the display method according to any one of the first aspect and the possible implementations of the first aspect.

According to a fourth aspect, this application provides a computer program product, and when the computer program product runs on a computer, the computer is enabled to perform the display method according to any one of the first aspect and the possible implementations of the first aspect.

### BRIEF DESCRIPTION OF DRAWINGS

FIG. 1 is a diagram of a software structure of an electronic device according to an embodiment of this application;
FIG. 2 is an interaction diagram of a method for obtaining property information of a memory of an electronic device in a procedure of starting a first application according to an embodiment of this application;
FIG. 3 is a flowchart of a method for displaying an interface of a first application according to an embodiment of this application; and
FIG. 4 is a diagram of a hardware structure of an electronic device according to an embodiment of this application.

### DESCRIPTION OF EMBODIMENTS

The following clearly and completely describes technical solutions in embodiments of this application with reference to the accompanying drawings in the embodiments of this application. The terms used in the following embodiments are merely used for describing specific embodiments, and are not intended to limit this application. As used in the specification and the appended claims of this application, singular expressions "one", "a", "the", "the foregoing", and "this" are also intended to include an expression such as "one or more", unless contrary indication is clearly specified in the context.

As described in this specification, referring to "some embodiments" or the like means that one or more embodiments of this application include particular features, structures, or characteristics described with reference to the embodiments. Therefore, statements such as "in some embodiments" or "in some other embodiments" that appear in different parts of this specification do not necessarily refer to same embodiments, but mean "one or more but not all embodiments", unless otherwise specifically emphasized in other manners. The terms "include", "comprise", and "have", and variants thereof all mean "include but are not limited to", unless otherwise specially emphasized in other manners.

In the embodiments of this application, "a plurality of" means "greater than or equal to two". It should be noted that in the description of the embodiments of this application, words such as "first" and "second" are merely used for distinguishing, and cannot be understood as an indication or implication of relative importance or an indication or implication of a sequence.

Currently, when a user uses a browser or a shopping application of an electronic device, a problem that the electronic device lags during sliding occurs.

It is found through researching that in a procedure in which the electronic device starts and runs the browser or the shopping application, in response to a sliding operation of the user on an application interface, a render thread (RenderThread) of the browser or the shopping application of the electronic device runs to update content on an interface for display. It takes a relatively long time for the render thread to continuously run a WebViewFunctor::drawVk function, which causes a lag problem during sliding.

It can be learned through further analysis that:
A main application thread of the browser or the shopping application creates a view, and invokes a WebViewFunctor::drawVk function of a Webview by using the render thread. The WebViewFunctor::drawVk function consumes a relatively long time because a GetPhysicalDeviceMemoryProperties2 function is invoked repeatedly for a plurality of times in a procedure in which the electronic device updates the content on the interface for display in response to the sliding operation of the user on the application interface. For example, statistics indicate that within a range of 10 seconds, the GetPhysicalDeviceMemoryProperties2 function is invoked 51 times. One time of invocation consumes a maximum of 49 ms and a minimum of 14 ms. Running Chrome_InProGp is required when the GetPhysicalDeviceMemoryProperties2 function is invoked to run, and running Chrome_InProGp wakes up WebViewFunctor::drawVk. When WebViewFunctor::drawVk consumes 186 ms, a level of severe lag is reached.

In addition, a purpose of invoking the GetPhysicalDeviceMemoryProperties2 function is to read property information of a memory to support an application in applying for the memory based on the property information of the memory. However, a memory property of the electronic device is determined when the electronic device is delivered from a factory, and modification is not allowed. In this case, it is not necessary to read repeatedly the memory property in a procedure of running the browser or the shopping application.

Based on this, to resolve a problem that the electronic device lags during sliding when running the browser or the shopping application, the embodiments of this application provide the following two solutions:
1. When the electronic device is powered on and started, the property information of the memory of the electronic device is obtained and buffered. In the procedure of running the browser or the shopping application, the electronic device obtains a buffer value.
2. A quantity of times of obtaining the property information of the memory of the electronic device is reduced. When the browser or the shopping application is cold started, the electronic device reads the property information of the memory once; and when the browser or the shopping application is hot started or warm started, the electronic device does not read the property information of the memory.

To describe in detail the foregoing two solutions provided in the embodiments of this application, the following is described with reference to a functional module in a software structure of the electronic device.

First, the software structure of the electronic device is described. The software structure of the electronic device may be understood as a layered architecture of an operating system of the electronic device. The operating system of the electronic device runs on a hardware component of the electronic device and may be an iOS operating system, an Android open source operating system, a Windows operating system, or the like.

In the embodiments of this application, an Android system with a layered architecture is used as an example to describe the software structure of the electronic device.

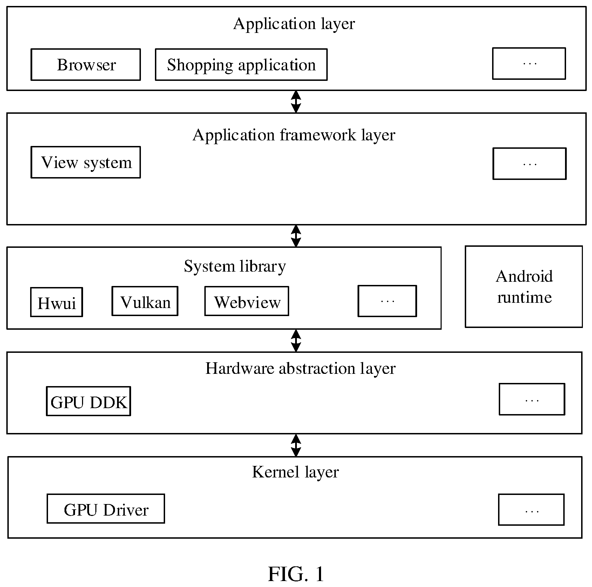

FIG. 1 is a block diagram of a software structure of an electronic device according to an embodiment of this application.

In the layered architecture, software is divided into several layers. Layers communicate with each other through a software interface. In some embodiments, an Android system is divided into five layers: an application layer, an application framework layer, an Android runtime (Android runtime) and system library, a hardware abstraction layer, and a kernel layer from top to bottom.

The application layer may include a plurality of applications. For example, FIG. 1 shows two applications: a browser and a shopping application.

The application framework layer provides an application programming interface (application programming interface, API) and a programming framework for an application at the application layer. The application framework layer includes some predefined functions. For example, the application framework layer shown in FIG. 1 includes a view system. In some embodiments, the view system may be configured to construct an application. The view system includes a visual control, for example, a control for displaying a text, or a control for displaying a picture. In a procedure in which the electronic device executes the foregoing two solutions, for a function of the view system, refer to the following content.

The system library may include a plurality of functional modules, for example, as shown in FIG. 1, Hwui, a three-dimensional graphics processing library (for example, Vulkan), and Webview. In some embodiments, Hwui is a hardware accelerated rendering engine for UI and is used for 2D drawing, and Hwui mainly uses Vulkan for GPU hardware drawing. Vulkan is configured to implement three-dimensional graphics drawing, image rendering, composition, layer processing, and the like. Webview is configured to display a webpage. In the procedure in which the electronic device executes the foregoing two solutions, for functions of Hwui, Vulkan, and Webview, refer to the following content.

The hardware abstraction layer includes at least a device development kit (Device Development Kit, DDK) of a graphics processing unit (graphics processing unit, GPU), which may be referred to as a GPU DDK.

The kernel layer includes at least a graphics processing unit driver (GPU Driver).

The following uses a browser application as an example to describe how the view system, Hwui, Vulkan, Webview, the GPU DDK, and the GPU Driver cooperate with each other, in a procedure of running the browser application, to obtain a buffer value of property information of a memory of the electronic device.

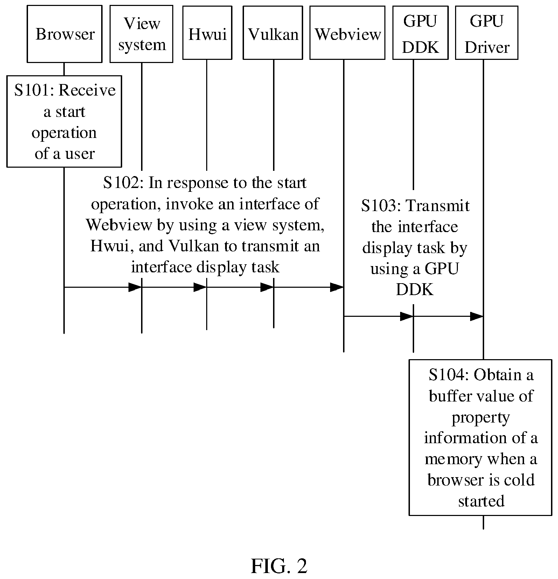

As shown in FIG. 2, a method for obtaining the property information of the memory of the electronic device includes the following:
S101: The browser application receives a start operation of a user.

In some embodiments, the user may start the browser application by tapping an icon of the browser application, tapping an interface of the browser application on a multitasking management interface, using voice wakeup, or the like. The browser application may receive the start operation of the user.

S102: In response to the start operation of the user, the browser application invokes an interface of Webview by using the view system, Hwui, and Vulkan to transmit an interface display task.

When the user starts the browser application, a display screen of the electronic device displays the interface of the browser application. Based on this, the browser application may deliver an interface display task to a lower-layer module. In some embodiments, the browser application may deliver the interface display task by delivering an instruction to the lower-layer module.

The browser application delivers the interface display task to the view system. When receiving the interface display task, the view system may deliver the interface display task to Hwui. In some embodiments, the view system may deliver the interface display task to Hwui by invoking a libhwui.so database. In some other embodiments, when receiving the interface display task, the view system may further create an interface of the browser application.

Based on the foregoing content of the software structure of the electronic device, Hwui mainly uses Vulkan for GPU hardware drawing. Based on this, when receiving the interface display task, Hwui may send the interface display task to Vulkan. In some embodiments, the libhwui.so database invokes a libwebviewchromium.so database by using Vulkan to transmit the interface display task, so that Hwui sends the interface display task to Vulkan and sends the interface display task to Webview by using Vulkan.

In some embodiments, after receiving the interface display task, Vulkan performs operations such as three-dimensional graphics drawing, image rendering, composition, and layer processing based on a browser interface indicated by the interface display task.

S103: Webview transmits the interface display task to the GPU Driver by using the GPU DDK.

After receiving the interface display task, Webview transmits the interface display task to the GPU Driver by using the GPU DDK.

The libwebviewchromium.so database of Webview transmits the interface display task to the GPU Driver by invoking the GPU DDK.

Webview is configured to display a webpage. Therefore, Hwui sends the interface display task to Webview by using Vulkan. In some embodiments, after receiving the interface display task, Webview may perform an operation for displaying a webpage based on the browser interface indicated by the interface display task.

It should be noted that in a scenario in which the user starts a shopping application, a shopping application interface displayed by the electronic device does not need to display a webpage. In this case, after the shopping application delivers the interface display task to Vulkan by using the view system and Hwui, Vulkan may directly transmit the interface display task to the GPU Driver by using the GPU DDK.

S104: When the browser is cold started, the GPU Driver obtains the buffer value of the property information of the memory.

It should be noted that starting of an application is divided into cold start, hot start, and warm start.

Cold start means that an application runs for the first time after the electronic device is started, or the application starts again after an application process is cleaned (for example, cleaning caused by a memory shortage of a system or cleaning actively triggered by the user). In other words, before the application is started, the system does not have any process of the application. Cold start needs to create a process, and the application needs initialization.

Hot start means that an application is restarted after the application is exited. An application process exists when the application is started, and an Activity object still exists in the memory, so that object initialization and layout parsing and drawing can be avoided.

Warm start means that an application is restarted after the application is exited. An application process exists when the application is started, but an Activity object may be reclaimed due to insufficient memory.

It should be further noted that, as may be learned from the foregoing content, when the electronic device is powered on, the GPU Driver obtains and buffers the property information of the memory of the electronic device. After receiving the interface display task, the GPU Driver obtains the buffer value of the property information of the memory of the electronic device, and does not obtain the property information of the memory of the electronic device.

In some embodiments, the GPU Driver invokes the GetPhysicalDeviceMemoryProperties2 function to obtain the buffer value of the property information of the memory.

In some embodiments, property information of a memory of a physical device describes an available memory heap (memory heaps) and a memory type (memory types). Based on this, in a procedure in which the GPU Driver obtains the property information of the memory of the electronic device, after invoking the GetPhysicalDeviceMemoryProperties2 function, the GPU Driver further needs to invoke a plurality of functions to read parameters such as an available memory heap and a memory type from a register. It takes a specific time for the GPU Driver to invoke the plurality of functions to read the parameters from the register.

The GPU Driver obtains and buffers the property information of the memory of the electronic device, so that the GPU Driver buffers the parameters such as the available memory heap and the memory type in a variable manner. The GPU Driver directly searches for and obtains a variable to obtain the buffer value of the property information of the memory of the electronic device, without a need to invoke the plurality of functions to read the parameters such as the available memory heap and the memory type. In this case, time consumed by the GPU Driver for obtaining the buffer value of the property information of the memory of the electronic device is far less than time consumed for obtaining the property information of the memory of the electronic device.

In some embodiments, pMemoryProperties may point to a variable that includes the parameters such as the available memory heap and the memory type.

It can be learned that the GPU Driver invokes the GetPhysicalDeviceMemoryProperties2 function to obtain the buffer value of the property information of the memory of the electronic device, which may reduce time consumed for invoking the WebViewFunctor::drawVk function, and mitigate a problem of lag during sliding caused by relatively long time consumed by a render thread for continuously running the WebViewFunctor::drawVk function.

After receiving the interface display task, the GPU Driver may determine whether the browser application is cold started. When determining that the browser application is cold started, the GPU Driver obtains the buffer value of the property information of the memory.

In some embodiments, when the electronic device starts the browser application, a start manner of the browser application may be first determined. For content of the foregoing three start manners of the application, the electronic device may determine the start manner of the browser application by detecting whether a process of the browser application and an Activity object of the browser application exist. When the electronic device detects that the process of the browser application and the Activity object of the browser application exist, it is determined that the browser application is cold started; otherwise, the electronic device determines that the browser application is not cold started.

When the GPU Driver determines that the browser application is not cold started, the browser application is warm started or hot started. In this case, the buffer value of the property information of the memory is not obtained. The GPU Driver can obtain the buffer value of the property information of the memory only in a scenario in which the browser application is cold started. Based on this, a quantity of times of invoking the GetPhysicalDeviceMemoryProperties2 function to run is greatly reduced, and time consumed for invoking the GetPhysicalDeviceMemoryProperties2 function to run is reduced, thereby reducing the time consumed for invoking the WebViewFunctor::drawVk function to run, and resolving the problem of lag during sliding caused by the relatively long time consumed by the render thread for continuously running the WebViewFunctor::drawVk function.

It should be noted that, in a procedure of running the browser application, by following an operation input by the user on the interface of the browser application, the electronic device may perform interface switching, that is, switching from one interface of the browser application to another interface. In a procedure in which the electronic device switches the interface of the browser application, the browser application may alternatively deliver the interface display task to the GPU Driver by using the view system, Hwui, Vulkan, Webview, and the GPU DDK. When receiving the interface display task, the GPU Driver does not obtain the buffer value of the property information of the memory.

In some other embodiments, the GPU Driver may determine that the browser application is cold started after receiving the interface display task. The GPU Driver may also obtain the property information of the memory of the electronic device. In a scenario in which the browser application is hot started and warm started, the GPU Driver does not obtain the property information of the memory of the electronic device, which greatly reduces the quantity of times of invoking the GetPhysicalDeviceMemoryProperties2 function to run and reduces the time consumed for invoking the GetPhysicalDeviceMemoryProperties2 function to run, thereby reducing the time consumed for invoking the WebViewFunctor::drawVk function to run. This may mitigate the problem of lag during sliding caused by relatively long time consumed by the render thread for continuously running the WebViewFunctor::drawVk function.

It can be learned from the foregoing content that, the GPU Driver obtains the buffer value of the property information of the memory of the electronic device, which can mitigate the problem of lag during sliding caused by relatively long time consumed by the render thread for continuously running the WebViewFunctor::drawVk function; and the GPU Driver obtains the property information of the memory of the electronic device in a scenario in which the application is cold started, which can also mitigate the problem of lag during sliding caused by relatively long time consumed by the render thread for continuously running the WebViewFunctor::drawVk function. The GPU Driver can obtain the buffer value of the property information of the memory only in the scenario in which the browser application is cold started, which can resolve the problem of lag during sliding caused by relatively long time consumed by the render thread for continuously running the WebViewFunctor::drawVk function.

After the solutions provided in the embodiment of this application are tested on the electronic device, the inventor found the following:
When the browser application is cold started, the GPU Driver invokes the GetPhysicalDeviceMemoryProperties2 function to obtain the buffer value of the property information of the memory of the electronic device. Compared with a case in which the GPU Driver invokes the GetPhysicalDeviceMemoryProperties2 function to obtain the property information of the memory of the electronic device, invoking duration decreases from original 30 ms to 3 µs. Therefore, 5% of the problem of lag during sliding in big data is resolved.

To be specific, the time consumed by the GPU Driver for invoking the GetPhysicalDeviceMemoryProperties2 function to obtain the property information of the memory of the electronic device is at a millisecond level, and the time consumed by the GPU Driver for invoking the GetPhysicalDeviceMemoryProperties2 function to obtain the buffer value of the property information of the memory of the electronic device is at a microsecond level.

It should be further noted that, after obtaining the buffer value of the property information of the memory, the GPU Driver may further send the buffer value of the property information of the memory to a GPU. In some embodiments, the buffer value of the property information of the memory of the electronic device may be sent to the GPU in a form of a structural body including: MemoryTypeCount, memoryTypes, memoryHeapCount, and memoryHeaps.

After receiving the buffer value of the property information of the memory of the electronic device, the GPU may perform an operation for displaying the interface of the browser application based on the first information and the buffer value of the property information of the memory of the electronic device. Certainly, the first information is necessary information for the GPU to perform the operation for displaying the interface of the browser application, for example, a priority of the GPU, and the priority is used to indicate whether the GPU preferentially processes the interface display task. The first information may further include image rendering data, for example, a size and a texture of an image. For the first information, refer to content of a related technology.

Certainly, in a procedure in which the GPU performs the operation for displaying the interface of the browser application, the buffer value of the property information of the memory of the electronic device is not necessary information. Therefore, in a scenario in which the browser application is hot started or warm started, the GPU does not receive the buffer value of the property information of the memory of the electronic device, but may perform the operation for displaying the interface of the browser application based on the first information.

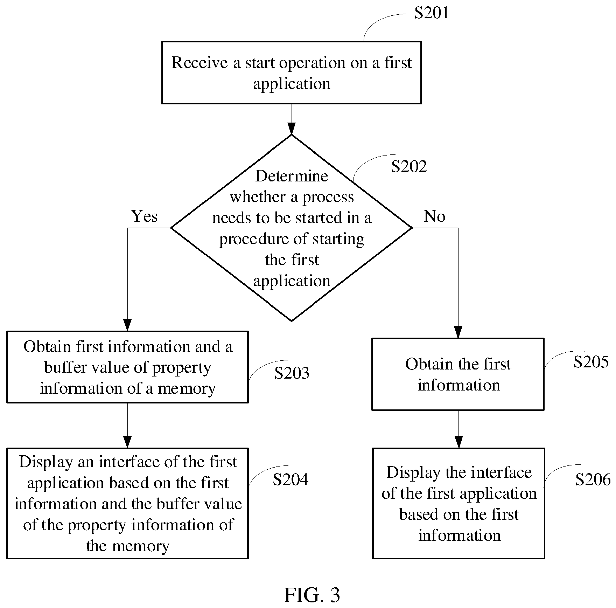

It can be learned from the foregoing content that, in a procedure in which the electronic device starts the browser application or the shopping application, the electronic device may use the method shown in FIG. 3 to display an interface of the browser application or the shopping application, to avoid the problem of lag during sliding when the user inputs an operation on the interface of the browser application or the interface of the shopping application.

A display method shown in FIG. 3 includes the following steps:
S201: Receive a start operation on a first application

The first application refers to a browser application or a shopping application. A user inputs an operation for starting the first application, and an electronic device receives the operation.

S202: Determine whether a process needs to be started in a procedure of starting the first application.

When receiving the start operation on the first application, the electronic device may display an interface of the first application. Before the interface of the first application is displayed, it is first determined whether a process needs to be started in the procedure of starting the first application. When the electronic device determines that a process needs to be started in the procedure of starting the first application, it is determined that the first application is cold started, and step S203 and step S204 are performed; otherwise, it is determined that the first application is not cold started, step S205 and step S206 are performed.

S203: Obtain first information and a buffer value of property information of a memory.

As shown in the foregoing content, the first information is association information for displaying the interface of the first application and necessary information for displaying the interface of the first application.

S204: Display an interface of the first application based on the first information and the buffer value of the property information of the memory.

After obtaining the first information and the buffer value of the property information of the memory, the electronic device may display the interface of the first application based on the first information and the buffer value of the property information of the memory.

S205: Obtain the first information.

When the first application is not cold started, the electronic device does not need to obtain the buffer value of the property information of the memory, may obtain only the first information, and displays the interface of the first application based on the first information by performing step S206.

S206: Display the interface of the first application based on the first information.

In some embodiments, after being started, the first application is in a running state, and the user may input an operation to switch the interface of the first application. For example, the first application is a shopping application, and the user inputs an interface switching operation to control the electronic device to switch a home page interface to a shopping cart interface for display. For the switched interface of the first application, the electronic device does not need to obtain the buffer value of the property information of the memory before displaying the interface.

In some embodiments, the user inputs a sliding operation on the interface of the first application, and the electronic device does not obtain the buffer value of the property information of the memory.

It should be further noted that, in the display method provided in the embodiment of this application, the method for obtaining the property information of the memory of the electronic device may be further applied to another software module or another hardware component of the electronic device, and another software module or another hardware component of the electronic device also has an action of frequently obtaining property information of a memory of a device.

The electronic device described in the foregoing embodiments of this application may be a mobile phone, a tablet computer, a personal digital assistant (Personal Digital Assistant, PDA), a desktop computer, a laptop computer, a notebook computer, an ultra-mobile personal computer (Ultra-mobile Personal Computer, UMPC), a handheld computer, a netbook, a wearable device, or the like.

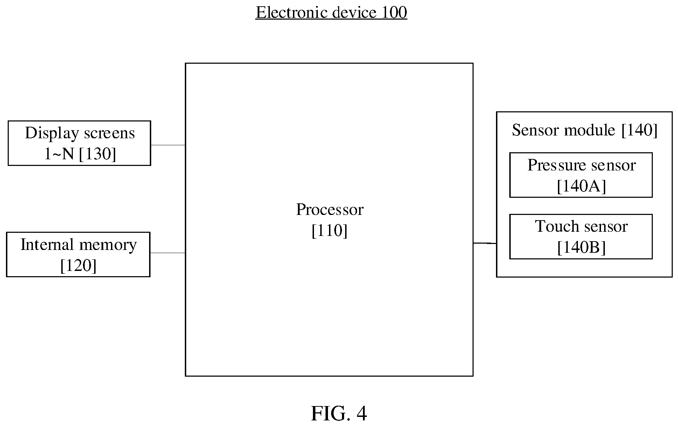

The mobile phone is used as an example. FIG. 4 shows an example of composition of an electronic device according to an embodiment of this application. As shown in FIG. 4, an electronic device 100 may include a processor 110, an internal memory 120, a display screen 130, a sensor module 140, and the like.

It should be understood that, to facilitate understanding the embodiments of this application, the electronic device 100 shown in FIG. 4 includes only some components related to the method for obtaining the property information of the memory of the electronic device provided in the embodiments of this application. The electronic device provided in the embodiments of this application may include more or fewer components than those in the electronic device 100 shown in FIG. 4. In other words, the electronic device 100 shown in FIG. 4 does not constitute a specific limitation on the electronic device provided in the embodiments of this application.

The processor 110 may include one or more processing units. For example, the processor 110 may include an application processor (application processor, AP), a graphics processing unit (graphics processing unit, GPU), an image signal processor (image signal processor, ISP), and a video codec. A storage may be further disposed in the processor 110 to store instructions and data.

The internal memory 120 may be configured to store computer-executable program code, and the computer-executable program code includes instructions. The processor 110 runs the instructions stored in the internal memory 120, to execute various function applications and data processing of the electronic device 100. In some embodiments, the internal memory 120 stores instructions used for performing the method for obtaining the property information of the memory of the electronic device. The processor 110 may execute the instructions stored in the internal memory 120 to obtain, in a procedure of running a browser application or a shopping application, a buffer value of the property information of the memory when the browser application or the shopping application is cold started.

In the sensor module 140, a pressure sensor 140A is configured to sense a pressure signal, and can convert the pressure signal into an electrical signal. A touch sensor 140B is also referred to as a "touch device". The touch sensor 140B may be disposed in the display screen 130. The touch sensor 140B and the display screen 130 form a touchscreen, also referred to as a "touch control screen". The touch sensor 140B is configured to detect a touch operation performed on or near the touch sensor. The touch sensor may transfer the detected touch operation to the application processor to determine a type of a touch event.

Another embodiment of this application further provides a computer-readable storage medium. The computer-readable storage medium stores instructions. When the instructions are run on a computer or a processor, the computer or the processor is enabled to perform one or more steps in any one of the foregoing methods.

The computer-readable storage medium may be a non-temporary computer-readable storage medium, for example, the non-temporary computer-readable storage medium may be a read-only memory (Read-Only Memory, ROM), a random access memory (Random Access Memory, RAM), a CD-ROM, a magnetic tape, a floppy disk, an optical data storage device, or the like.

Another embodiment of this application further provides a computer program product including instructions. When the computer program product runs on a computer or a processor, the computer or the processor is enabled to perform one or more steps in any one of the foregoing methods.

## Claims

1. A display method, comprising:
receiving a first operation of a user for starting a first application;
obtaining first information and property information of a memory in response to the first operation, and displaying an interface of the first application based on the first information and the property information of the memory;
receiving, within a first time period after the user exits the first application, a second operation of the user for starting the first application; and
obtaining second information in response to the second operation, and displaying the interface of the first application based on the second information.

2. The display method according to claim 1, wherein the first information and the second information are association information for displaying the interface of the first application.

3. The display method according to claim 1 or 2, before the obtaining first information and property information of a memory, further comprising: determining that a process needs to be started in a procedure of starting the first application.

4. The display method according to any one of claims 1-3, before the obtaining second information, further comprising: determining that a process does not need to be started in the procedure of starting the first application.

5. The display method according to any one of claims 1-4, further comprising:
receiving a third operation input by the user on the interface of the first application, wherein the third operation is used to switch the interface of the first application; and
obtaining third information in response to the third operation, and displaying a switched interface of the first application based on the third information, wherein the third information is association information for displaying the switched interface of the first application.

6. The display method according to claim 5, wherein the obtaining first information and property information of a memory comprises: obtaining the first information and a buffer value of the property information of the memory.

7. The display method according to claim 6, wherein time consumed for obtaining the buffer value of the property information of the memory is at a microsecond level.

8. The display method according to claim 5 or 6, wherein in a procedure of obtaining the buffer value of the property information of the memory, an electronic device does not invoke a function to read a parameter stored in a register.

9. The display method according to any one of claims 5-8, wherein the buffer value of the property information of the memory is stored in a variable form when being enabled by the electronic device.

10. The display method according to any one of claims 1 to 9, wherein the obtaining first information and property information of a memory comprises:
obtaining the first information and the property information of the memory, when a graphics processing unit driver of the electronic device receives an interface display task by using a three-dimensional graphics processing library Vulkan.

11. An electronic device, comprising:
one or more processors, a storage, and a display screen, wherein
the storage and the display screen are coupled to the one or more processors, the storage is configured to store a computer program, the computer program comprises computer instructions, and when the one or more processors execute the computer instructions, the electronic device performs the display method according to any one of claims 1-10.

12. A computer-readable storage medium, configured to store a computer program, wherein when being executed, the computer program is specifically configured to implement the display method according to any one of claims 1-10.

13. A computer program product, wherein when the computer program product runs on a computer, the computer is enabled to perform the display method according to any one of claims 1-10.
